# EUROPÄISCHE PATENTSCHRIFT

(11) **EP 3 456 681 B1**
(45) Veröffentlichungstag und Bekanntmachung des Hinweises auf die Patenterteilung: **10.09.2025**
(21) Anmeldenummer: 18184455.6
(22) Anmeldetag: 19.07.2018
(51) Int. Cl.: B60D 1/48, B62D 15/02, B66F 9/075, B66F 17/00, G01S 15/931

(54) **FLURFÖRDERZEUG, INSBESONDERE SCHLEPPERFAHRZEUG**
INDUSTRIAL TRUCK, IN PARTICULAR TRACTOR
CHARIOT DE MANUTENTION, EN PARTICULIER VÉHICULE TRACTEUR

(30) Priorität: 22.08.2017 DE 102017119202
(43) Veröffentlichungstag der Anmeldung: 20.03.2019
(73) Patentinhaber: STILL GmbH, 22113 Hamburg (DE)
(72) Erfinder: CORLEIS, Claas-Tido, 21109 Hamburg (DE); VOSS, Michael, 22765 Hamburg (DE)
(74) Vertreter: Patentship Patentanwaltgesellschaft

(56) Entgegenhaltungen:
- EP-A1- 3 165 420
- EP-A2- 1 495 906
- WO-A1-2007/074113
- WO-A2-2015/121818
- DE-A1- 10 221 298
- DE-A1- 102012 106 988
- JP-A- 2015 170 284
- US-A1- 2010 289 662
- US-B1- 6 606 027

## Beschreibung

Die Erfindung betrifft ein als Schlepperfahrzeug ausgebildetes Flurförderzeug, welches mit einem Antriebs- und Bremssystem, einer Lenkung sowie mit mindestens einem als Ultraschallsensor ausgebildeten Abstands-Sensor zur Überwachung zumindest eines Sektors des Umfangsbereiches des Flurförderzeugs versehen ist, wobei das Flurförderzeug in Vorwärts- und Rückwärtsfahrtrichtung betreibbar und frei verfahrbar ist.

In der DE10 2012 106 988 A1 ist ein Verfahren zur Steuerung eines Flurförderzeugs mit Abstandssensoren am Fahrzeugheck offenbart, um eine hinter dem oder seitlich des Fahrzeughecks liegende Überwachungszone auf Hindernisse zu überwachen. Während bei Fahrzeugstillstand und Erfassung eines Hindernisses in der Überwachungszone ein Anfahren in die Überwachungszone hinein durch die auch die Abstandssensoren auswertende Fahrzeugsteuerung unterbunden wird, wird während eines Fahrens in die Überwachungszone hinein und Erfassung eines darin vorhandenen Hindernisses ein Weiterfahren in die Überwachungszone hinein nicht verhindert.

Die DE 102 21 298 A1 offenbart ein Flurförderfahrzeug, bei welchem mindestens ein zur Überwachung der Rückseite des Flurförderzeugs vorgesehener Abstands-Sensor und ein Sensor zur Erfassung der Fahrgeschwindigkeit oder eines zur Fahrgeschwindigkeit proportionalen Signals an eine Steuereinrichtung angeschlossen sind, die in Wirkverbindung mit einem Fahrantrieb und einer Bremsanlage des Flurförderzeugs steht. Dadurch kann das Flurförderzeug bei Detektion eines Hindernisses durch den Abstands-Sensor in Abhängigkeit von der Ist-Fahrgeschwindigkeit und vom ermittelten Abstand zum Hindernis gesteuert verzögert werden. Damit besteht im Hinblick auf mögliche Kollisionen mit Gegenständen und Personen ein verringertes Gefährdungspotential.

Die WO 2015/121818 A2 offenbart ein Flurförderzeug, bei dem mehrere über den Umfang verteilte Sensoren vorgesehen sind, um eine 360⁰-Überwachung der Umgebung zu erzielen. Die Sensoren sind Sensoren, die einen in der Umgebung des Fahrzeugs befindlichen Responder, der als RFID-Tag ausgebildet ist, aktivieren, der an einem Fahrzeug in der Umgebung oder von einer Person in der Umgebung getragen wird. Die Sensoren am Fahrzeug senden Aktivierungssignale ("activation signal") aus. Befindet sich eine Responder in dem Überwachungsfeld eines der Sensoren, wird der Responder aktiviert und sendet ein Antwortsignal ("response signal"), das vom entsprechenden Sensor empfangen wird und an eine Steuereinheit weitergeleitet wird, die eine optische Warnanzeige an einem Monitor und/oder einen akustischen Alarm an einem Lautsprecher erzeugt.

Die US 6 606 027 B1 offenbart einen LWK, der mit mehreren über den Umfang verteilten Sensoren versehen ist, die als Abstandssensor oder Näherungssensor ausgebildet sind. Bei erkannten Objekten werden entsprechende Warnlampen auf einem Display aktiviert.

Die JP 2015 170284 A1 offenbart ein autonomes Flurförderzeug, das mehrere Umgebungssensoren aufweist, die als 2D-Lasersensoren ausgebildet sind. Die Überwachungsfelder der Sensoren werden in Abhängigkeit von der Fahrgeschwindigkeit und des Lenkwinkels verändert, um eine entsprechende fahrsituationsabhängige Kollision mit einem Hindernis zu verhindern.

Die EP 1 495 906 A2 offenbart ein als Schlepperfahrzeug ausgebildetes Flurförderzeug gemäß dem Oberbegriff des Anspruchs 1.

Die WO 2007/074113 A1 offenbart ein Verfahren und ein System zur Unterstützung eines Fahrers beim Einparken oder Rangieren eines Kraftfahrzeugs.

Die EP 3 165 420 A1 offenbart ein Verfahren zum Bestimmen eines durch einen mit einem Kraftfahrzeug verbundenen Anhänger eingenommenen Bereichs.

Als Schlepperfahrzeuge ausgebildete Flurförderzeuge dienen zum Transport von Anhängelasten, beispielsweise im Flughafenbereich zum Gepäcktransport, und haben hingegen bislang keine aktiven Fahrerassistenzsysteme zur Warnung bzw. Vermeidung von Kollisionen mit statischen Objekten, oder anderen Fahrzeugen, Anhängern oder Personen.

Der vorliegenden Erfindung liegt nun die Aufgabe zugrunde, ein eingangs beschriebenes Schlepperfahrzeug für den flexibleren Einsatz zu verbessern. Dabei sollen in je nach Bedarf und Anwendungsfall unterschiedlichen Kombinationen die Kollisionsvermeidung mit situationsabhängiger Funktion von Fahrassistenzsystemen ermöglicht werden.

Diese Aufgabe wird erfindungsgemäß dadurch gelöst, dass das Flurförderzeug als Schlepperfahrzeug ausgebildet ist und eine Mehrzahl von als Ultraschallsensoren ausgebildeten Abstands-Sensoren entlang des gesamten Umfangs des Schlepperfahrzeugs verteilt und an eine am oder im Schlepperfahrzeug vorhandene Auswerte- und/oder Anzeigeeinrichtung angeschlossen ist, die ausgelegt ist, um die Signale der als Ultraschallsensoren ausgebildeten Abstands-Sensoren zu verarbeiten und die über diese als Ultraschallsensoren ausgebildeten Abstands-Sensoren ermittelten Objektinformationen zu verarbeiten, auf einer graphischen Anzeige darzustellen und/oder über eine akustische Ausgabeeinrichtung zu signalisieren, wobei die Auswerte- und/oder Anzeigeeinrichtung mit dem Antriebs- und Bremssystem und der Lenkung des Flurförderzeugs in Wirkverbindung steht und ausgelegt ist, um in Abhängigkeit von den Objektinformationen Steuersignale an das Antriebs- und Bremssystem und an die Lenkung des Flurförderzeugs zu generieren, wobei die von den Abstand-Sensoren ermittelte Information über die Umgebung als reduzierender Eingriff in eine Lenkunterstützung der Lenkung genutzt wird und bei einer drohenden Kollision mit einem Hindernis die maximale Lenkunterstützung der Lenkung reduziert wird. Eine derartige Anordnung ermöglicht also die vollständige und einfach für den Fahrer interpretierbare Darstellung eines - in Umfangsrichtung des Flurförderzeugs gesehen 360-Grad - Kollisionsschutzes und die Integration in verschiedenste Sicherheits- und Fahrassistenzsysteme in das Flurförderzeug mit geringer Maximalgeschwindigkeit aber hoher Wendigkeit und Manövrierbarkeit. Mit mehreren über den gesamten Umfang des Flurförderzeugs bevorzugt gleichmäßig verteilt angeordneten Abstands-Sensoren kann somit eine komplette Umfelderkennung des Flurförderzeugs und ein 360-Grad Kollisionsschutz des Flurförderzeugs erzielt werden. Mit den Abstands-Sensoren werden hierbei alle Umgebungsobjekte innerhalb der Reichweite erfasst, die sich im Umfeld des Flurförderzeugs befinden. Mittels der Auswerte- und/oder Anzeigeeinrichtung können die mittels der Abstands-Sensoren erfassten Objektinformationen für den Fahrer des Flurförderzeugs grafisch und/oder akustisch aufgearbeitet werden.

Die Abstand-Sensoren sind als Ultraschallsensoren ausgeführt, die eine technisch bewährte und wirtschaftliche Lösung darstellen. Überdies erfassen diese Sensoren Objekte in einem relativ großen Sektor.

Bevorzugt weisen die Abstands-Sensoren eine maximale Reichweite im Bereich zwischen 5 und 15 Metern auf. Damit ist eine gute Korrelation zwischen der maximalen Geschwindigkeit des Flurförderzeugs, insbesondere eines Schlepperfahrzeugs, typischerweise im Bereich von kleiner 30 km/h, dessen Fahr-, Manövrier- und Geschwindigkeitsprofile und der Reichweite bzw. dem Messbereich der Abstands-Sensoren gegeben, die Objektinformationen aus einem Entfernungsbereich liefern, der immer noch rechtzeitige Reaktionen durch den Fahrer oder automatische Eingriffe, beispielsweise eine Notbremsfunktion, in die Fahrsysteme des Flurförderzeugs gewährleistet. Der Einsatz von als Ultraschallsensoren ausgebildeten Abstands-Sensoren, die eine maximale Reichweite im Bereich zwischen 5 und 15 Metern aufweisen, ermöglicht somit die vollständige Darstellung eines Kollisionschutzes bei geringem technischen Aufwand und bewährter Sensortechnik entsprechend der hohen Wendigkeit und aller Einsatzbedingungen eines Schlepperfahrzeugs.

Eine weitere Ausführungsform der Erfindung ist dadurch gekennzeichnet, dass mindestens ein Sensor zur Erfassung der Fahrgeschwindigkeit und Fahrtrichtung oder eines zur Fahrgeschwindigkeit proportionalen Signals oder des Lenkwinkels oder eines dem Lenkwinkel proportionalen Signals an die Auswerte- und/oder Anzeigeeinrichtung angeschlossen ist und die Auswerte- und Anzeigeeinrichtung ausgelegt ist, dass die über diese(n) Sensore(n) ermittelten Informationen zusammen mit den Objektinformationen zumindest auf der graphischen Anzeige dargestellt werden bzw. die Darstellung der Objektinformation entsprechend adaptiert wird. Hierdurch kann die Fahrinformation, wie Fahrtrichtung, Fahrgeschwindigkeit und Lenkwinkel, bei der Aufarbeitung berücksichtigt werden, um die von den Abstands-Sensoren ermittelten Objektinformationen mit den Informationen über die Fahrzeugbewegung zu verknüpfen. Damit kann der Fahrer des Flurförderzeugs noch leichter und auch früher auf Hindernisse in der Umgebung reagieren, und es ist einfach eine automatische Adaption der Objektinformationen an die menschliche Reaktionszeit möglich.

Gemäß einer alternativen erfindungsgemäßen Ausführungsform ist das Flurförderzeug dadurch gekennzeichnet, dass die Auswerte- und Anzeigeeinrichtung ausgelegt ist, die Information des Sensors für die Fahrtrichtung und die Informationen über die Anordnung der Abstands-Sensoren entlang des Umfangs des Flurförderzeugs zu verarbeiten. Damit ist eine Klassifizierung der Objektinformation in besonders relevante Anteile, beispielsweise in Fahrtrichtung oder in einer Richtung für die gewünschte Abstimmung mit anderen Objekten, und in weniger wichtige Informationen, wie etwa betreffend Objekte entgegen der Fahrtrichtung, einfach zu realisieren.

Vorteilhafterweise können hierbei die Abstands-Sensoren in einem der Fahrtrichtung entgegengesetzten Sektor abgeschaltet bzw. deren Signale bei der Verarbeitung nicht berücksichtigt werden, um sich dauerhaft im Überwachungsbereich befindliche Objekte, beispielsweise Anhänger des Schlepperfahrzeugs, nicht zu berücksichtigen und derart die Aufmerksamkeit des Fahrers nicht von tatsächlichen Hindernissen abzulenken bzw. automatisch Fahrassistenzsysteme nicht mit irrelevanten Daten zu versorgen.

Die Erfindung sieht vor, dass die Auswerte- und/oder Anzeigeeinrichtung mit dem Antriebs- und Bremssystem und der Lenkung des Flurförderzeugs in Wirkverbindung steht und ausgelegt ist, um in Abhängigkeit von den Objektinformationen Steuersignale an das Antriebs- und Bremssystem und an die Lenkung, des Flurförderzeugs zu generieren. Diese unmittelbare Einwirkung auf die Fahr- und Lenksysteme des Flurförderzeugs ermöglicht bereits die Integration der Sensoranordnung in verschiedenste Fahrassistenzsysteme bzw. erlaubt erst die Implementierung derartiger Systeme im erfindungsgemäß ausgerüsteten Flurförderzeug. Die von den Abstand-Sensoren ermittelte Information über die Umgebung kann beispielsweise als reduzierender Eingriff in den Fahrantrieb des Flurförderzeugs genutzt werden und bei einer drohenden Kollision mit einem Hindernis die maximale Fahrgeschwindigkeit des Flurförderzeugs reduziert werden, im Extremfall bis zum Stillstand des Flurförderzeugs. Die von den Abstand-Sensoren ermittelte Information über die Umgebung kann beispielsweise genutzt werden, um den Abstand zu einem vorausfahrenden Fahrzeug über einen entsprechenden Eingriff in den Fahrantrieb des Flurförderzeugs zu regulieren. Die von den Abstand-Sensoren ermittelte Information über die Umgebung wird erfindungsgemäß als reduzierender Eingriff in eine Lenkunterstützung der Lenkung genutzt und bei einer drohenden Kollision mit einem Hindernis wird die maximale Lenkunterstützung der Lenkung reduziert.

Besonders vorteilhaft ist dabei eine erfindungsgemäße Variante, bei welcher das Antriebs- und/oder Bremssystem, gegebenenfalls auch der Lenkung, des Flurförderzeugs, mit einer Steuereinheit in Wirkverbindung steht, welche ihrerseits mit der Auswerte- und/oder Anzeigeeinrichtung steuertechnisch verbunden ist, um in Abhängigkeit von den ermittelten Objektinformationen Steuersignale für das Antriebs- und Bremssystem, gegebenenfalls auch für die Lenkung, des Flurförderzeugs, zu generieren. Dies gestattet durch die erweiterte Funktionalität einer separaten Steuereinheit und deren höherer Flexibilität in der Programmierung die Realisierung von zumindest teilautonomen Systemen wie etwa Einparkhilfen oder Spurhalteassistenten bis hin zu sogar komplett autonomem Betrieb, speziell in Verbindung mit Positionserkennungssystemen.

Weitere Vorteile und Einzelheiten der Erfindung werden anhand des in den schematischen Figuren dargestellten Ausführungsbeispiels näher erläutert. Hierbei zeigt
- Figur 1: eine Seitenansicht eines erfindungsgemäßen Flurförderzeugs mit einer schematisch dargestellten Ausführungsform des Sensorsystems, und
- Figur 2: eine Draufsicht auf das Flurförderzeug der Fig. 1, ebenfalls mit einer schematisch dargestellten Ausführungsform des erfindungsgemäßen Sensorsystems.

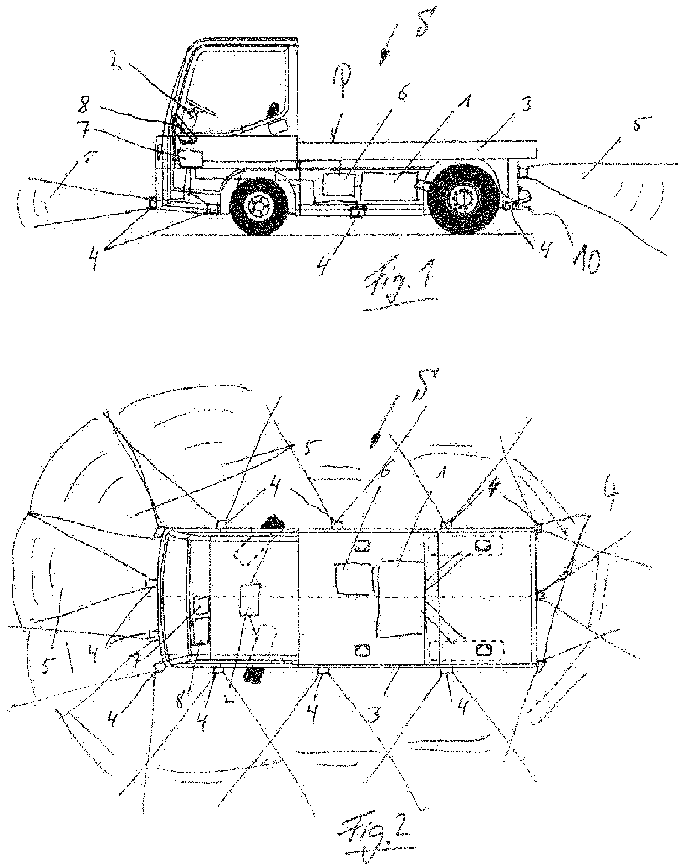

In den Figuren 1 und 2 ist ein erfindungsgemäßes Flurförderzeug dargestellt, das als Schlepperfahrzeug S ausgebildet ist.

Das Schlepperfahrzeug S ist mit einem Antriebs- und Bremssystem 1, einer Lenkung 2 sowie erfindungsgemäß mit einer Mehrzahl von am Chassis 3 des Schlepperfahrzeugs S angebrachten Abstands-Sensoren 4 zur Überwachung zumindest eines Sektors 5 des Umfangsbereiches des Schlepperfahrzeugs S versehen. Eine Steuereinrichtung 6 ist wirkungsmäßig mit zumindest dem Antriebs- und Bremssystem 1 verbunden und setzt die Eingaben des Fahrers um, wobei das Schlepperfahrzeug S in Vorwärts- und Rückwärtsfahrtrichtung betreibbar und frei verfahrbar ist. Das Schlepperfahrzeug S ist mit einer Ladeplattform P zum Transport von Lasten versehen und/oder mit einer Anhängekupplung 10, an die ein oder mehrere Anhänger angehängt werden können.

Über die Ausrichtung, den Abstand und die Form bzw. Größe des überwachten Sektors 5 der Abstands-Sensoren 4 ist bevorzugt eine komplette 360-Grad Umfelderfassung des Schlepperfahrzeug S gegeben, wie in Figur 2 dargestellt ist.

Beispielsweise können an jeder Fahrzeugseite des Schlepperfahrzeugs S, mehrere, beispielsweise vier Stück, Abstands-Sensoren 4 in konstantem Abstand angebracht sein, so dass über den gesamten Umfang des Schlepperfahrzeugs S mehrere Abstands-Sensoren 4, beispielsweise sechszehn Stück, verteilt angeordnet sind. Die Anordnung und die Anzahl der Sensoren 4 kann dabei sehr variabel sein, insbesondere fahrzeug- und systemspezifisch ausgeführt sein.

Bei dem erfindungsgemäßen Schlepperfahrzeug S sind somit derart mehrere Abstands-Sensoren 4 verteilt angeordnet, dass eine komplette Umfelderfassung des Schlepperfahrzeugs S und ein 360-Grad Kollisionsschutz erzielt wird. Mit den Abstands-Sensoren 4 werden alle Umgebungsobjekte innerhalb der Reichweite der Abstands-Sensoren 4 erfasst, die sich um Umfeld des Schlepperfahrzeugs S befinden.

Insbesondere kann bei Bedarf an geringerer Umfeldabdeckung, beispielsweise einer Abdeckung von nur 180° oder gar nur 90° auch eine geringere Anzahl von Abstands-Sensoren 4 zum Einsatz kommen.

Die Abstands-Sensoren 4 sind an eine am oder im Schlepperfahrzeugs S vorhandene Auswerte- und/oder Anzeigeeinrichtung 7 angeschlossen. Einige der Verbindungen zwischen den Abstands-Sensoren 4 und der Einrichtung 7, aber auch weitere Sensor-, Steuer- oder Signalleitungen, sind beispielhaft in den Zeichnungen dargestellt. Die Auswerte- und/oder Anzeigeeinrichtung 7 ist derart ausgelegt, typischerweise als elektronische Schaltung oder programmgesteuerter Computer ausgebildet, um die Signale der Abstands-Sensoren 4 zu verarbeiten und die über diese Abstands-Sensoren 4 ermittelten Objektinformationen zu verarbeiten. Dies umfasst in jedem Fall, diese Objektinformationen auf einer graphischen Anzeige 8 für den Fahrer des Schlepperfahrzeugs S darzustellen und/oder über eine akustische Ausgabeeinrichtung zu signalisieren. Mit diesem Sensorsystem 4, 7, 8 werden alle Umgebungsobjekte innerhalb der Reichweite der Abstands-Sensoren 4 erfasst, die sich im Umfeld des Schlepperfahrzeugs S befinden.

Die Abstands-Sensoren 4 sind jeweils als Ultraschallsensoren ausgeführt.

Optional kann die Aufarbeitung auch Fahrinformationen des Schlepperfahrzeugs S beinhalten, beispielsweise die Fahrtrichtung, die Fahrgeschwindigkeit und Lenkwinkel, welche über mindestens einen Sensor zur Erfassung der Fahrgeschwindigkeit und Fahrtrichtung oder eines zur Fahrgeschwindigkeit proportionalen Signals oder des Lenkwinkels oder eines dem Lenkwinkel proportionalen Signals an die Auswerte- und/oder Anzeigeeinrichtung 7 angeschlossen ist. In diesem Fall ist die Auswerte- und/oder Anzeigeeinrichtung 7 derart ausgelegt bzw. programmiert, dass die genannten Informationen zusammen mit den Objektinformationen, die von den Abstands-Sensoren 4 ermittelt werden, zumindest auf der graphischen Anzeige 8 dargestellt werden bzw. die Darstellung der Objektinformation entsprechend adaptiert wird, um die Objektinformationen mit den Informationen über die Fahrzeugbewegung zu verknüpfen.

Die Auswerte- und/oder Anzeigeeinrichtung 7 steht auch, gegebenenfalls über die Steuereinrichtung 6, mit dem Antriebs- und Bremssystem 1 und der Lenkung 2 des Schlepperfahrzeugs S in Wirkverbindung. Es ist dann derart ausgelegt, um in Abhängigkeit von den Objektinformationen, die von den Abstands-Sensoren 4 ermittelt werden, Steuersignale an das Antriebs- und Bremssystem 1 und an die Lenkung 2, des Schlepperfahrzeugs S, zu generieren, so dass die Information über die Umgebung für einen reduzierenden Eingriff in den Fahrantrieb genutzt werden kann. So kann bei drohender Kollision mit einem Hindernis die maximale Geschwindigkeit des Schlepperfahrzeugs S reduziert werden, im Extremfall bis zum Stillstand.

Zudem kann die über das Sensorsystem 4, 7, 8 erhaltene Information über die Umgebung des Schlepperfahrzeugs S auch dazu genutzt werden, um den Abstand zu einem voraus fahrenden Fahrzeug zu regulieren. Dies wird über einen entsprechenden Eingriff in das Antriebs- und Bremssystem 1 bewirkt, um das Schlepperfahrzeug S an die Geschwindigkeit eines voraus fahrenden Fahrzeuges anzupassen, sowohl im Sinn einer Erhöhung der Geschwindigkeit als auch im Sinn einer Reduzierung der Geschwindigkeit, im Extremfall auch hier bis zum Stillstand.

Die Information über die Umgebung, die von den Abstands-Sensoren 4 ermittelt werden, werden auch für einen reduzierenden Eingriff in die Lenkunterstützung der Lenkung 2 des Schlepperfahrzeugs 2 genutzt. So wird bei drohender Kollision mit einem Hindernis die maximale Lenkunterstützung der Lenkung 2 reduziert.

Die oben genannten Einflussmöglichkeiten auf die Fahr- und Lenksysteme des Schlepperfahrzeugs S auf Basis der Informationen, die über die Sensoranordnung 4, 7, 8 erhalten werden, lassen viele weitere Funktionen und Fahrerassistenzsysteme abbilden. Zum Beispiel kann eine Umgebungsvermessung stattfinden, um Parkpositionen zu identifizieren, und/oder in einem teilautonomen Betrieb ein automatisches Einparken zu ermöglichen, oder allgemein das Rücksetzen zu automatisieren. Auch das Problem des toten Winkels bei Rückspiegeln kann durch Überwachung dieses Bereiches mittels der erfindungsgemäßen Anordnung beseitigt werden.

Speziell im Schleppbetrieb des Schlepperfahrzeugs S kann die erfindungsgemäße Anordnung 4, 7, 8 die Überwachung der vom als Schlepperfahrzeug S ausgebildeten Flurförderzeug gezogenen Anhänger auf Anwesenheit, korrekten Abstand und korrekte, mit der Fahrtinformation des Schlepperfahrzeugs S korrelierende Bewegung ermöglichen. Damit ergibt sich ein besonders sicherer Betrieb im Logistikeinsatz.

Über die seitlich angeordneten Abstands-Sensoren 4 ist es weiterhin möglich, eine parallele Fahrt entlang beispielsweise einer Wand, Mauer oder Leitplanke einzustellen und derart eine Spurhaltefunktion zu realisieren.

## Patentansprüche

1. Als Schlepperfahrzeug (S) ausgebildetes Flurförderzeug, welches mit einem Antriebs- und Bremssystem (1) und einer Lenkung versehen ist, wobei das Schlepperfahrzeug (S) in Vorwärts- und Rückwärtsfahrtrichtung betreibbar und frei verfahrbar ist, **dadurch gekennzeichnet, dass** das Schlepperfahrzeugs (S) mit mindestens einem als Ultraschallsensor ausgebildeten Abstandssensor (4) zur Überwachung zumindest eines Sektors des Umfangsbereiches des Schlepperfahrzeugs (S) versehen ist, wobei eine Mehrzahl von als Ultraschallsensoren ausgebildeten Abstands-Sensoren (4) entlang des gesamten Umfangs des Schlepperfahrzeugs (S) verteilt und an eine am oder im Schlepperfahrzeug (S) vorhandene Auswerte- und/oder Anzeigeeinrichtung (7) angeschlossen ist, die ausgelegt ist, um die Signale der als Ultraschallsensoren ausgebildeten Abstands-Sensoren (4) zu verarbeiten und die über diese als Ultraschallsensoren ausgebildeten Abstands-Sensoren (4) ermittelten Objektinformationen zu verarbeiten, auf einer graphischen Anzeige (8) darzustellen und/oder über eine akustische Ausgabeeinrichtung zu signalisieren, wobei die Auswerte- und/oder Anzeigeeinrichtung (7) mit dem Antriebs- und Bremssystem (1) und der Lenkung (2) des Schlepperfahrzeugs (S) in Wirkverbindung steht und ausgelegt ist, um in Abhängigkeit von den Objektinformationen Steuersignale an das Antriebs- und Bremssystem (1) und an die Lenkung (2) des Flurförderzeugs zu generieren, wobei die von den Abstand-Sensoren (4) ermittelte Information über die Umgebung als reduzierender Eingriff in eine Lenkunterstützung der Lenkung (2) genutzt wird und bei einer drohenden Kollision mit einem Hindernis die maximale Lenkunterstützung der Lenkung (2) reduziert wird.

2. Als Schlepperfahrzeug (S) ausgebildetes Flurförderzeug nach Anspruch 1, **dadurch gekennzeichnet, dass** die Abstands-Sensoren (4) eine maximale Reichweite im Bereich zwischen 5 und 15 Metern aufweisen.

3. Als Schlepperfahrzeug (S) ausgebildetes Flurförderzeug nach Anspruch 1 oder 2, **dadurch gekennzeichnet, dass** mindestens ein Sensor zur Erfassung der Fahrgeschwindigkeit und Fahrtrichtung oder eines zur Fahrgeschwindigkeit proportionalen Signals oder des Lenkwinkels oder eines dem Lenkwinkel proportionalen Signals an die Auswerte- und/oder Anzeigeeinrichtung (7) angeschlossen ist und die Auswerte- und Anzeigeeinrichtung (7) ausgelegt ist, dass die über diese(n) Sensore(n) ermittelten Informationen zusammen mit den Objektinformationen zumindest auf der graphischen Anzeige (8) dargestellt werden bzw. die Darstellung der Objektinformation entsprechend adaptiert wird.

4. Als Schlepperfahrzeug (S) ausgebildetes Flurförderzeug nach einem der vorhergehenden Ansprüche, **dadurch gekennzeichnet, dass** die Auswerte- und/oder Anzeigeeinrichtung (7) ausgelegt ist, die Information des Sensors für die Fahrtrichtung und die Informationen über die Anordnung der Abstands-Sensoren (4) entlang des Umfangs des Flurförderzeugs zu verarbeiten und die Abstands-Sensoren (4) in einem der Fahrtrichtung entgegengesetzten Sektor abzuschalten bzw. deren Signale bei der Verarbeitung nicht zu berücksichtigen.

5. Als Schlepperfahrzeug (S) ausgebildetes Flurförderzeug nach einem der vorangegangenen Ansprüche, **dadurch gekennzeichnet, dass** das Antriebs- und Bremssystem (1), gegebenenfalls auch der Lenkung (2), des Flurförderzeugs, mit einer Steuereinheit (6) in Wirkverbindung steht, welche ihrerseits mit der Auswerte- und/oder Anzeigeeinrichtung (7) steuertechnisch verbunden ist, um in Abhängigkeit von den ermittelten Objektinformationen Steuersignale für das Antriebs- und Bremssystem (1), gegebenenfalls auch für die Lenkung (2), des Flurförderzeugs, zu generieren.

## Claims

1. Industrial truck designed as a tractor vehicle (S), which is provided with a drive and brake system (1) and a steering system (2), wherein the tractor vehicle (S) can be operated in a forward and reverse direction and can be moved freely, **characterized in that** the tractor vehicle (S) is provided with at least one distance sensor (4), designed as an ultrasonic sensor, for monitoring at least one sector of the perimeter area of the tractor vehicle (S), wherein a plurality of distance sensors (4), designed as ultrasonic sensors, are distributed along the entire perimeter of the tractor vehicle (S) and connected to an evaluation and/or display device (7) present on or in the tractor vehicle (S), which evaluation and/or display device is configured to process the signals from the distance sensors (4), designed as ultrasonic sensors, and to process the object information determined via these distance sensors (4), designed as ultrasonic sensors, to represent same on a graphic display (8) and/or to signal same via an acoustic output device, wherein the evaluation and/or display device (7) is operatively connected to the drive and brake system (1) and the steering system (2) of the tractor vehicle (S) and is configured to generate control signals to the drive and brake system (1) and to the steering system (2) of the industrial truck based on the object information, wherein the information about the environment that is determined by the distance sensors (4) is used as a reducing intervention in a steering assistance process of the steering system (2) and, in the event of an imminent collision with an obstacle, the maximum steering assistance process of the steering system (2) is reduced.

2. Industrial truck designed as a tractor vehicle (S) according to Claim 1, **characterized in that** the distance sensors (4) have a maximum range in the range between 5 and 15 metres.

3. Industrial truck designed as a tractor vehicle (S) according to Claim 1 or 2, **characterized in that** at least one sensor for detecting the driving speed and direction of travel or a signal proportional to the driving speed or the steering angle or a signal proportional to the steering angle is connected to the evaluation and/or display device (7) and the evaluation and display device (7) is configured so that the information determined via this sensor or these sensors is represented together with the object information at least on the graphic display (8) or the representation of the object information is adapted accordingly.

4. Industrial truck designed as a tractor vehicle (S) according to any one of the preceding claims, **characterized in that** the evaluation and/or display device (7) is configured to process the information from the sensor for the direction of travel and the information about the arrangement of the distance sensors (4) along the perimeter of the industrial truck and to switch off the distance sensors (4) in a sector opposite to the direction of travel or not to take their signals into account during processing.

5. Industrial truck designed as a tractor vehicle (S) according to any one of the preceding claims, **characterized in that** the drive and brake system (1), optionally also the steering system (2), of the industrial truck is operatively connected to a control unit (6), which in turn is connected to the evaluation and/or display device (7) for control purposes in order to generate control signals for the drive and brake system (1), optionally also for the steering system (2), of the industrial truck, depending on the object information determined.

## Revendications

1. Véhicule de manutention conçu sous la forme de véhicule tracteur (S), qui est équipé d'un système (1) d'entraînement et de freinage et d'une direction (2), le véhicule tracteur (S) étant apte à être actionné dans un sens de marche avant et un sens de marche arrière et à se déplacer librement, **caractérisé en ce que** le véhicule tracteur (S) est équipé d'au moins un capteur de distance (4) conçu sous forme de capteur à ultrasons, pour surveiller au moins un secteur de la zone périphérique du véhicule tracteur (S), une pluralité de capteurs de distance (4) conçus sous forme de capteurs à ultrasons étant répartis sur toute la périphérie du véhicule tracteur (S) et étant reliés à un dispositif (7) de traitement et/ou d'affichage présent sur ou dans le véhicule tracteur (S), lequel dispositif est conçu pour traiter les signaux des capteurs de distance (4) conçus sous forme de capteurs à ultrasons et pour traiter les informations relatives à des objets déterminées par l'intermédiaire de ces capteurs de distance (4) conçus sous forme de capteurs à ultrasons, les représenter sur un afficheur graphique (8) et/ou pour les signaler via un dispositif de sortie acoustique, le dispositif (7) de traitement et/ou d'affichage étant relié fonctionnellement au système (1) d'entraînement et de freinage et à la direction (2) du véhicule tracteur (S) et étant conçu pour générer, en fonction des informations sur les objets, des signaux de commande destinés au système (1) d'entraînement et de freinage et à la direction (2) du véhicule de manutention, les informations sur l'environnement déterminées par les capteurs de distance (4) étant utilisées sous forme d'intervention réductrice dans une assistance de direction de la direction (2) et, en cas d'une collision imminente avec un obstacle, l'assistance maximale de direction de la direction (2) étant réduite.

2. Véhicule de manutention conçu sous forme de véhicule tracteur (S) selon la revendication 1, **caractérisé en ce que** les capteurs de distance (4) ont une portée maximale dans la plage comprise entre 5 et 15 mètres.

3. Véhicule de manutention conçu sous forme de véhicule tracteur (S) selon la revendication 1 ou la revendication 2, **caractérisé en ce qu'**au moins un capteur destiné à détecter la vitesse de déplacement et la direction de déplacement ou un signal proportionnel à la vitesse de déplacement ou l'angle de braquage ou un sugnal proportionnel à l'angle de braquage, est connecté au dispositif (7) de traitement et/ou d'affichage et le dispositif de traitement et d'affichage (7) est conçu de telle sorte que les informations déterminées par ce(s) capteur(s) sont représentées conjointement avec les informations sur l'objet au moins sur l'afficheur graphique (8) ou la représentation des informations sur l'objet est adaptée en conséquence.

4. Véhicule de manutention conçu sous forme de véhicule tracteur (S) selon l'une des revendications précédentes, **caractérisé en ce que** le dispositif (7) de traitement et/ou d'affichage est conçu de manière à traiter les informations du capteur pour la direction de déplacement et les informations sur la disposition des capteurs de distance (4) le long de la périphérie du véhicule de manutention et à désactiver les capteurs de distance (4) dans un secteur opposé à la direction de déplacement ou à ne pas tenir compte de leurs signaux lors du traitement.

5. Véhicule de manutention conçu sous forme de véhicule tracteur (S) selon l'une des revendications précédentes, **caractérisé en ce que** le système (1) d'entraînement et de freinage, le cas échéant également celui de la direction (2), du véhicule de manutention est relié fonctionnellement à une unité de commande (6) qui est elle-même reliée au dispositif (7) de traitement et/ou d'affichage à des fins de commande, afin de générer, en fonction des informations déterminées sur l'objet, des signaux de commande pour le système (1) d'entraînement et de freinage, le cas échéant également pour la direction (2) du véhicule de manutention.
